Europäisches Patentamt

European Patent Office

Office européen des brevets

(11) Veröffentlichungsnummer: **0 139 978 B1**

(12) # EUROPÄISCHE PATENTSCHRIFT

(45) Veröffentlichungstag der Patentschrift: **11.05.88**

(21) Anmeldenummer: **84109936.9**

(22) Anmeldetag: **21.08.84**

(51) Int. Cl.⁴: **B 01 D 23/10, B 01 D 23/24**

(54) **Verfahren zum Reinigen von Filtermaterial sowie Vorrichtung zur Durchführung des Verfahrens.**

(30) Priorität: **20.10.83 DE 3338170**

(43) Veröffentlichungstag der Anmeldung:
**08.05.85 Patentblatt 85/19**

(45) Bekanntmachung des Hinweises auf die Patenterteilung:
**11.05.88 Patentblatt 88/19**

(84) Benannte Vertragsstaaten:
**AT BE CH FR GB IT LI LU NL SE**

(56) Entgegenhaltungen:
**DE - A - 1 411 744**
**DE - C - 247 143**
**DE - C - 539 266**
**GB - A - 721 531**
**US - A - 4 033 874**

(73) Patentinhaber: **Preussag AG, Leibnizufer 9,
D-3000 Hannover 1 (DE)**

(72) Erfinder: **Wagner, Axel, Dipl.-Ing.,
Hammersteinstrasse 2, D-3000 Hannover (DE)**

(74) Vertreter: **Haar, Lucas Heinz Jörn, Dipl.-Ing.,
Wilhelm-Leuschner-Strasse 23,
D-6360 Friedberg/Hessen (DE)**

ACTORUM AG

## Beschreibung

Die Erfindung betrifft ein Verfahren zum Reinigen von Filtermaterial von Filtern für die mechanische Filtration von Flüssigkeiten, insbesondere Wasser, bei dem die zu reinigende Flüssigkeit einen mit Filtermaterial gefüllten Filterbehälter von oben nach unten durchströmt, wobei das mit Schmutzstoffen beladene Filtermaterial sukzessive aus dem Filterbehälter an dessen oberen Ende abgeführt, einem Waschbehälter zugeführt, gereinigt und anschliessend dem Filterbehälter wieder an dessen unterem Ende zugeführt wird, sowie eine Vorrichtung zur Durchführung des Verfahrens.

Die hier in Rede stehenden Filter dienen im allgemeinen zur Flüssigkeitaufbereitung und insbesondere zur Abwasser-, Brauchwasser- oder Trinkwasser-Aufbereitung.

Die Reinigung solcher Filter erfolgte bislang in der Regel durch Rückspülung, wobei eine Betriebsunterbrechung erforderlich ist. Um solch ungewünschte Betriebsunterbrechungen zu vermeiden, ist es bekannt, zwei oder mehr Filteranlagen parallel anzuordnen, wobei jeweils eine Filteranlage in Betrieb ist und die andere Filteranlage gereinigt werden kann. Diese Massnahme ist jedoch äusserst kostspielig und aufwendig.

Aus der DE-OS 2 225 682 ist ein Verfahren bekannt, bei dem die Flüssigkeit den mit Filtermaterial gefüllten Filterbehälter in Aufwärtsrichtung durchströmt und das mit Schmutzstoff beladene Filtermaterial portions- und taktweise in den Bodenraum des Filterbehälters abgelassen wird, in einen dem Filterbehälter nachgeschalteten Waschbehälter gefördert und nach einem Waschprozess im Kreislauf in den Filterbehälter über Kopf zurückgeführt wird. Hierdurch soll erreicht werden, dass bei einem praktisch kontinuierlichen Betrieb des Filters eine Teilmenge der Filterstoffe aus dem Filterbehälter abgezogen, gewaschen und wieder in den Filterbehälter zurückgefördert wird, so dass zur Reinigung des Filters keine langen Betriebsunterbrechungen mehr erforderlich sind.

Allerdings wird auch im Falle des vorgenannten Standes der Technik das Filter durch Schliessen eines Ventils in der Zuleitung für die zu reinigende Flüssigkeit jeweils kurzzeitig ausser Betrieb gesetzt, wobei in diesem Zeitraum eine gereinigte Filtermaterial-Charge dem Filterbehälter zugeführt wird. Es muss somit auch im Falle dieser Anordnung der Betrieb unterbrochen werden.

Weiterhin wird im Falle der vorbekannten Anordnung als nachteilig empfunden, dass das gereinigte Filtermaterial mittels einer irgendwie gearteten Pumpeneinrichtung wieder zurück in den Filterbehälter transportiert werden muss. Beim konkreten Ausführungsbeispiel wird diese Pumpeneinrichtung durch ein im Waschbehälter angeordnetes Tauchrohr realisiert, wobei durch Öffnen eines Ventils über eine Leitung sogenanntes Transportwasser von oben in den Waschbehälter eingelassen wird, wodurch die Filtermasse in das Tauchrohr gedrückt und in die Transportleitung eingeführt wird.

Ein dem eingangs genannten Verfahren ähnliches Verfahren, bei dem allerdings nach dem Ionenaustauschprinzip gearbeitet wird, ist aus der DE-OS 1 411 744 bekannt. Auch hierbei ist ein diskontinuierlicher Filtrationsbetrieb vorgesehen, da während der Transportphase, bei der ein Teil des Filtermaterials aus der Filterkolonne abgezogen und den Reinigungsstufen zugeführt wird, die Filtrationsphase unterbrochen ist. Weiterhin ist auch im Falle der vorgenannten DE-OS eine Pumpeinrichtung zum Transport des Filtermaterials vorgesehen.

Aus der DE-C-247 143 ist auch bereits ein Verfahren zum Reinigen von Filtermaterial von Filtern zur mechanischen Filtration von Wasser bekannt, bei dem der Filtriervorgang keine Unterbrechung erfährt. Bei diesem bekannten Verfahren durchströmt die Flüssigkeit einen mit Sand gefüllten Filterbehälter in absteigender Richtung. Am Fuss des Filterbehälters werden mit einer von der Flüssigkeit durchströmten Strahlpumpe kleine Mengen des Sandes während der Filtration entnommen und durch ein aufsteigendes Rohr nach oben in einen über dem Kopf des Filterbehälters angeordneten Behälter gespült, wobei der Sand während seines Aufstiegs im Rohr einer Waschung unterliegt. Der gewaschene Sand fällt in den Behälter nach unten in einen zentralen Gang, der ihn dem Kopf der Sandsäule im Filterbehälter zuführt. Das Wasch- und Transportwasser steigt mit den von ihm getragenen Verunreinigungen aus dem Behälter nach oben in eine Leitung, welche es einer Abflussstelle zuführt.

Der vorliegenden Erfindung liegt die Aufgabe zugrunde, das eingangs genannte Verfahren so zu verbessern, dass bei möglichst einfachem Aufbau der Filtereinrichtung ein kontinuierlicher Filtrationsbetrieb möglich ist. Weiterhin soll durch die Erfindung eine die vorgenannten Bedingungen erfüllende Vorrichtung geschaffen werden.

Zur Lösung dieser Aufgabe ist erfindungsgemäss vorgesehen, dass ein Filtermaterial verwendet wird, welches spezifisch leichter ist als die Flüssigkeit, dass das verschmutzte Filtermaterial aufgrund der zwischen Filterbehälter und Waschbehälter vorhandenen Druckdifferenz vom Filterbehälter in den Waschbehälter gefördert wird, und dass das gereinigte Filtermaterial mittels Auftriebskräften von dem unterhalb des Filterbehälters angeordneten Waschbehälter in den Filterbehälter zurückgeführt wird.

Das aufgrund seines geringen spezifischen Gewichts im oberen Bereich des Filterbehälters schwimmende Filtermaterial wird hierbei in durch das gegenüber dem Filterbehälter relativ kleine Volumen des Waschbehälters definierten Chargen quasi-kontinuierlich bzw. sukzessive aufgrund der zwischen Filterbehälter und Waschbehälter vorhandenen Druckdifferenz zum Reinigen in den Waschbehälter überführt, ohne dass hierbei der Betrieb des Filter unterbrochen werden müsste. Das gereinigte Filtermaterial, welches sich wiederum aufgrund seines geringen spezifischen Gewichts im oberen Bereich des Waschbehälters ansammelt, strömt nach Öffnung der zwischen Waschbehälter und Filterbehälter vorhandenen Verbindungsleitung selbsttätig zurück in den Filterbehälter, wiederum, ohne dass eine Unterbrechung des Filterbetriebes erforderlich wäre. Wie sich aus dem Vorstehenden ergibt, ist auch keinerlei zusätzliche Pumpeneinrichtung od. dgl. vonnöten, um das zu reinigende Filtermaterial durch seinen Reinigungskreislauf hindurchzuführen.

Die Erfindung umfasst auch denjenigen Fall, wo die Filtration durch Verwendung von Biomasse erfolgt, wo also als Filtermaterial ein geeignetes Trägermaterial verwendet wird.

Gemäss einem weiteren vorteilhaften Verfahrensmerkmal ist vorgesehen, dass das verschmutzte Trägermaterial durch die von dem Filterbehälter zum Waschbehälter führende Leitung wirbelnd hindurchtransportiert wird. Es werden also die Strömungsverhältnisse in der Verbindungsleitung so gewählt, dass innerhalb der Leitung starke Turbulenzen entstehen, so dass durch den wirbelnden Materialtransport bewirkt wird, dass das Filtermaterial selbsttätig von anhaftenden Stoffen befreit wird.

Weitere vorteilhafte Merkmale der Erfindung ergeben sich aus den übrigen Ansprüchen im Zusammenhang mit der nachfolgenden Beschreibung, in der mehrere Ausführungsbeispiele der Erfindung anhand der Zeichnung näher erläutert werden. In der Zeichnung zeigen in schematischer Darstellung:

Fig. 1 eine erfindungsgemässe Vorrichtung zum Reinigen von Filtermaterial,

Fig. 2 den Waschbehälter einer alternativen Ausführungsform der Reinigungsvorrichtung gemäss Fig. 1, und

Fig. 3 den Waschbehälter einer weiteren alternativen Ausführungsform der Reinigungsvorrichtung gemäss Fig. 1.

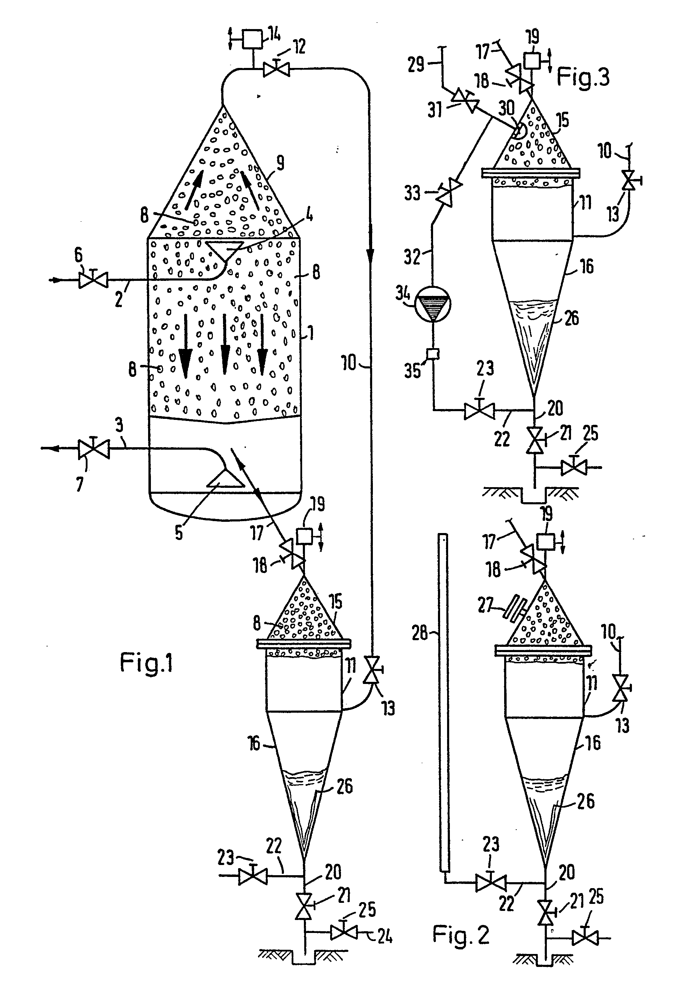

Fig. 1 zeigt einen Filterbehälter 1, welcher mit einer Zuleitung 2 zum Zuführen der zu reinigenden Flüssigkeit und einer Abflussleitung 3 zum Abführen der gereinigten Flüssigkeit verbunden ist. Die zu reinigende Flüssigkeit wird in bekannter Weise über die Aufgabeeinrichtung 4 im oberen Bereich des Filterbehälters 1 aufgegeben, während die gereinigte Flüssigkeit über die Aufnahmeeinrichtung 5 vom unteren Bereich des Filterbehälters 1 abgeleitet wird. Die Zuleitung 2 und die Abflussleitung 3 ist jeweils durch ein Ventil 6 bzw. 7 verschliessbar.

Innerhalb des im wesentlichen zylindrischen Filterbehälters 1 befindet sich das Filter- bzw. Trägermaterial 8. Dieses Filtermaterial 8 weist ein spezifisches Gewicht auf, welches geringer ist als dasjenige der zu reinigenden Flüssigkeit, so dass das Filtermaterial aufgrund seines Auftriebs nach oben wandert und sich, wie dargestellt, im mittleren und oberen Bereich des Filterbehälters 1 ansammelt. Die zu reinigende Flüssigkeit strömt von der Aufgabeeinrichtung 4 zur Aufnahmeeinrichtung 5 durch das Filtermaterial 8 hindurch, wobei sich die aus der zu reinigenden Flüssigkeit zu entfernenden Festkörperteilchen am Filtermaterial 8 anlagern und von diesem zurückgehalten werden, so dass die Aufnahmeeinrichtung 5 gereinigte Flüssigkeit aufnimmt.

Der obere Teil des Filterbehälters 1 ist geometrisch so gestaltet, dass es möglich ist, das Filtermaterial 8 über die gesamte Querschnittsfläche des Filterbehälters 1 abzuziehen. Zu diesem Zwecke ist der Kopf 9 des Reinigungsbehälters 1 vorzugsweise kegelförmig ausgebildet. Das obere Ende des kegelförmigen Kopfes 9 mündet in eine Verbindungsleitung 10, die zu einem Waschbehälter 11 führt, welcher unterhalb des Filterbehälters 1 angeordnet ist, d.h. das obere Ende des Waschbehälters 11 liegt unterhalb des unteren Endes des Filterbehälters 1. Die Verbindungsleitung 10 ist über zwei jeweils nahe dem Filterbehälter 1 bzw. dem Waschbehälter 11 angeordnete Ventile 12, 13 verschliessbar. Ein an der höchsten Stelle der Verbindungsleitung 10 zwischen Filterbehälter 1 und Ventil 12 angeordnetes Lüftungsventil 14 dient zum Be- und Entlüften des Filterbehälters 1.

Der Waschbehälter 11 weist vorzugsweise einen kegelförmigen Kopf 15 sowie einen trichterförmigen unteren Teil 16 auf. Die Verbindungsleitung 10 mündet vorzugsweise im unteren mittleren Bereich des Waschbehälters 11. Das obere Ende des Kopfes 15 mündet in eine weitere Verbindungsleitung 17, welche nach oben ansteigend ausgebildet ist und in das Innere des Filterbehälters 1 hinein verläuft. Das obere Ende der Verbindungsleitung 17 ist innerhalb des Filterbehälters 1 etwas oberhalb der Aufnahmeeinrichtung 5 innerhalb der gereinigten Flüssigkeit und unterhalb des Bereichs des Filtermaterials 8 angeordnet. Über ein Ventil 18 ist die Verbindungsleitung 17 verschliessbar. Ein vom oberen Ende des Kopfes 15 abzweigendes Entlüftungsventil 19 dient zum Be- bzw. Entlüften des Waschbehälters 11.

Vom unterem Ende des trichterförmigen unteren Teils 16 des Waschbehälters 11 führt eine Abflussleitung 20 nach unten weg, welche über ein Ventil 21 absperrbar ist. Über diese Abflussleitung 20 können die sich im trichterförmigen unteren Teil 16 des Waschbehälters 11 ansammelnden Verunreinigungen gegebenenfalls zur weiteren Nachbehandlung abgeführt werden. Von der Abflussleitung 20 zweigt zwischen dem unteren Ende des Waschbehälters 11 und dem Ventil 21 eine Leitung 22 ab, welche über ein Ventil 23 absperrbar ist. Über die Leitung 22 ist es möglich, geklärte Flüssigkeit aus dem Waschbehälter 11 abzuziehen, in einen Behälter zu leiten oder dem Filterbehälter 1 wieder zuzuführen. In alternativer Weise kann diese Leitung 22 auch als Messstelle dienen. Eine weitere Leitung 24, welcher unterhalb des Ventils 21 von der Abflussleitung 20 abzweigt, ist über ein Ventil 25 verschliessbar und dient dazu, dem durch die Abflussleitung 20 abfliessenden Dünnschlamm 26 Chemikalien zuzudosieren.

Die Reinigung des Filtermaterials 8 erfolgt quasi-kontinuierlich bzw. portions- und taktweise.
Der Reinigungszyklus kann beispielsweise unter
festgelegten Zeitintervallen erfolgen oder aber in
Abhängigkeit von der Verschmutzung des Filtermaterials bzw. des geklärten Wassers gesteuert
werden. Der Verschmutzungsgrad kann beispielsweise durch die zwischen Zuleitung 2 und
Ableitung 3 vorhandene Druckdifferenz gemessen werden oder beispielsweise auch mittels bekannter fotometrischer Methoden.

Als Ausgangssituation sei angenommen, dass
die Ventile 6 und 7 geöffnet, die Ventile 12, 13, 18,
21 und 23 geschlossen sind und der Waschbehälter 11 entleert ist. Werden nun die Ventile 12 und
13 geöffnet, so wird eine bestimmte, durch das
Volumen des Waschbehälters 11 definierte Charge des Filtermaterials 8 aufgrund der zwischen
Filterbehälter 1 und Waschbehälter 11 vorhandenen Druckdifferenz in die Verbindungsleitung 10
gedrückt und über die Verbindungsleitung 10
dem drucklosen Waschbehälter 11 zugeführt. Die
Strömungsverhältnisse in der Verbindungsleitung 10 werden vorzugsweise hierbei so gewählt,
dass das Filtermaterial 8 innerhalb der Verbindungsleitung 10 wirbelnd transportiert wird, wobei dieser wirbelnde Materialtransport bewirkt,
dass das verschmutzte Filtermaterial bereits in
der Verbindungsleitung 10 von anhaftenden Stoffen befreit wird.

Ist der Waschbehälter 11 mit Flüssigkeit und
Filtermaterial 8 gefüllt, so wird die Verbindungsleitung 10 durch Schliessen der Ventile 12 und 13
geschlossen. Nach Abschluss des Filtermaterialtransports aus dem Filterbehälter 1 in den
Waschbehälter 11 folgt eine Pausenzeit, deren
Länge abhängig ist von der Sink- bzw. Sedimentationsgeschwindigkeit der abgetrennten Stoffe.
Während dieser Pausenzeit sammeln sich somit
die vom Filtermaterial abgetrennten Schmutzstoffe im trichterförmigen unteren Teil 16 des
Waschbehälters. Aufgrund seines geringen spezifischen Gewichts sammelt sich das gereinigte
Filtermaterial 8 im oberen Bereich des Waschbehälters 11.

Nach Ablauf der Pausenzeit wird das Ventil 18
geöffnet und über die Verbindungsleitung 17
stellt sich zwischen dem Filterbehälter 1 und dem
Waschbehälter 11 ein Gleichgewichtsdruck ein.
Danach strömt das Filtermaterial 8 aufgrund seines Auftriebes über die Leitung 17 in den Filterbehälter 1 zurück, wo es sich auf der Unterseite des
im Filterbehälter 1 befindlichen Filtermaterials 8
aufschichtet.

Nach Abschluss des Filtermaterialtransports
aus dem Waschbehälter 11 in den Filterbehälter 1
wird das Ventil 21 geöffnet, so dass mit Hilfe des
im Filterbehälter 1 herrschenden Druckes die abgetrennten Stoffe 26 aus dem trichterförmigen
unteren Teil 16 des Waschbehälters 11 über die
Abflussleitung 20 abgelassen werden können.
Die aus dem Filterbehälter 1 nachströmende Flüssigkeit bewirkt gleichzeitig ein Reinigen des
Waschbehälters 11.

Nach Abschluss des Reinigungsprozesses wird
das Ventil 18 geschlossen. Das Ventil 21 bleibt so
lange geöffnet, bis der Waschbehälter 11 leergelaufen ist. Anschliessend wird auch das Ventil 21
wieder geschlossen und der vorgenannte Reinigungszyklus kann zu gegebener Zeit erneut beginnen.

Wie aus dem Vorstehenden deutlich wird, werden weder für das Abziehen des Filtermaterials
aus dem Filterbehälter 1 in den Waschbehälter 11
noch für den Rücktransport des gereinigten Filtermaterials aus dem Waschbehälter 11 in den
Filterbehälter 1 Pumpen oder pumpenähnlich
wirkende Fördersysteme benötigt, ebensowenig
wie für das Abziehen des Dünnschlamms 26 aus
dem Waschbehälter 11. Hieraus ergibt sich ein
ganz besonders einfacher Aufbau der Filteranlage. Auch ist erkennbar, dass die Filteranlage
ohne jede Düsen-, Rohr- oder Spaltsiebböden
betrieben werden kann.

Besonders ist noch darauf hinzuweisen, dass
während des Transports des Filtermaterials 8 in
den Waschbehälter 11 bzw. in den Filterbehälter
1 oder während der Spülung des Filtermaterials 8
keinerlei Betriebsunterbrechung im Filterbehälter
1 eintritt bzw. erforderlich ist. Die Filteranlage
kann demnach auch bei der Reinigung des Filtermaterials ohne Unterbrechung kontinuierlich betrieben werden.

Wie bereits ausgeführt, wird das Filtermaterial
8 quasi-kontinuierlich chargenweise zum Spülen
aus dem Filterbehälter 1 in den Waschbehälter 11
ausgebracht und die Spülwassermenge sowie
die Filtermaterialmenge wird durch das gewählte
Volumen des Waschbehälters 11 bestimmt. Das
Volumen des Waschbehälters 11 ist sehr viel kleiner als das Volumen des Filterbehälters 1. Hieraus ergibt sich, dass dem Waschbehälter nachgeschaltete Eindicker oder Absetzbecken intermittierend mit definierten geringen Dünnschlammmengen beschickt werden. Dies hat den
Vorteil, dass nur kleine Rohrleitungsquerschnitte
benötigt werden und dass eine gleichmässige
Beckenbeschickung erfolgt.

Wie aus dem Vorstehenden deutlich wird, ist
innerhalb des Filterbehälters 1 die allgemeine
Strömungsrichtung der Flüssigkeit von oben
nach unten, während die allgemeine Wanderungsrichtung des Filtermaterials entgegengesetzt, d.h. von unten nach oben verläuft. Es wird
somit das gereinigte Filtermaterial dem Filterbehälter 1 auf der Klarwasserseite zugeführt, während das stark verschmutzte Material auf der
Flüssigkeitsaufgabeseite abgezogen wird.

Die alternative Ausführungsform gemäss Fig. 2
entspricht im wesentlichen derjenigen gemäss
Fig. 1, so dass für gleiche Teile gleiche Bezugsziffern verwendet werden. In Fig. 2 ist der Kopf 15
des Waschbehälters 11 mit einer an sich bekannten Schwingeinrichtung 27 wirkungsmässig verbunden, welche zum zusätzlichen Reinigen des
Filtermaterials dient. Die in den Waschbehälter
11 mittels der Schwingvorrichtung 27 eingeleiteten Schwingungen werden über ein Standrohr 28 abgeleitet, welches mit der Leitung 22 verbunden ist.

Im Falle der Ausführungsform gemäss Fig. 3 werden wiederum für gleiche Teile gleiche Bezugsziffern verwendet. Im Falle dieses Ausführungsbeispiels ist der Kopf 15 des Waschbehälters 11 mit einer zusätzlichen Zuleitung 29 verbunden, welche in den unteren Bereich des Filterbehälters 1 mündet. Am waschbehälterseitigen Ende der Zuleitung 29 ist ein Sieb 30 od. dgl. vorgesehen, welches verhindert, dass Filtermaterial 8 in die Zuleitung 29 eintreten kann. Die Zuleitung 29 ist über ein Ventil 31 verschliessbar. Eine weitere Leitung 32 ist an ihrem einen Ende mit der Leitung 22 verbunden und mündet mit ihrem anderen Ende in die Leitung 29 zwischen Ventil 31 und Kopf 15. Zwischen einem weiteren Ventil 33 in der Leitung 32 und dem Ventil 23 ist eine Pumpe 34 geschaltet. Über eine Dosiereinrichtung 35 kann der in der Leitung 32 befindlichen Flüssigkeit ein geeignetes Mittel zudosiert werden.

Mit der vorstehend beschriebenen Vorrichtung kann das Verfahren dahingehend erweitert werden, dass über die Zuleitung 29 ein Druckausgleich zwischen den beiden Behältern erfolgen kann. Bei geöffnetem Ventil 31 wird das Ventil 21 so lange geöffnet, bis der Dünnschlamm 26 abgezogen ist. Anschliessend wird das Ventil 31 geschlossen, und hiernach werden die Ventile 33 und 23 geöffnet. Mit Hilfe der Pumpe 34 ist es nun möglich, die im Waschbehälter 11 befindliche Flüssigkeit im Kreis durch das Filtermaterial hindurchzufahren und an der Dosierstelle 35 Chemikalien und/oder Beladungsstoffe (z.B. Aktivkohlepulver) auf das Filtermaterial aufzubringen. Nach Abschluss der Beladung bzw. Chemikalien-Dosierung schaltet die Pumpe 34 ab und die Ventile 33 und 23 werden geschlossen. Danach kann, wie oben beschrieben, das Filtermaterial über die Verbindungsleitung 17 in den Filterbehälter 1 überfliessen.

**Patentansprüche**

1. Verfahren zum Reinigen von Filtermaterial von Filtern für die mechanische Filtration von Flüssigkeiten, insbesondere Wasser, bei dem die zu reinigende Flüssigkeit einen mit Filtermaterial gefüllten Filterbehälter von oben nach unten durchströmt, wobei das mit Schmutzstoffen beladene Filtermaterial sukzessive aus dem Filterbehälter an dessen oberen Ende abgeführt, einem Waschbehälter zugeführt, gereinigt und anschliessend dem Filterbehälter wieder an dessen unterem Ende zugeführt wird, dadurch gekennzeichnet, dass ein Filtermaterial verwendet wird, welches spezifisch leichter ist als die Flüssigkeit, dass das verschmutzte Filtermaterial aufgrund der zwischen Filterbehälter und Waschbehälter vorhandenen Druckdifferenz vom Filterbehälter in den Waschbehälter gefördert wird, und dass das gereinigte Filtermaterial mittels Auftriebskräften von dem unterhalb des Filterbehälters angeordneten Waschbehälter in den Filterbehälter zurückgeführt wird.

2. Verfahren nach Anspruch 1, dadurch gekennzeichnet, dass das verschmutzte Trägermaterial durch die vom Filterbehälter zum Waschbehälter führende Verbindungsleitung wirbelnd hindurchtransportiert wird.

3. Vorrichtung zur Durchführung des Verfahrens nach Anspruch 1 oder 2, wobei das obere Ende eines zumindest teilweise mit Filtermaterial gefüllten Filterbehälters über eine erste Verbindungsleitung für Filtermaterial mit einem Waschbehälter und dieser über eine zweite Verbindungsleitung für Filtermaterial mit dem unteren Bereich des Filterbehälters verbunden ist, wobei das zu reinigende Filtermaterial sukzessive aus dem Filterbehälter in den Waschbehälter und von hier zurück in den Filterbehälter geleitet wird, dadurch gekennzeichnet, dass das Filtermaterial (8) ein geringeres spezifisches Gewicht als die Flüssigkeit aufweist, dass der Waschbehälter (11) unterhalb des Filterbehälters (1) angeordnet ist, und dass die zweite Verbindungsleitung (17) vom oberen Ende des Waschbehälters (11) ansteigend zum unteren Bereich des Filterbehälters (1) verläuft.

4. Vorrichtung nach Anspruch 3, wobei die zweite Verbindungsleitung über ein Ventil verschliessbar ist, dadurch gekennzeichnet, dass das obere Ende des Waschbehälters (11) mit einer Be- bzw. Entlüftungseinrichtung (19) verbunden ist.

5. Vorrichtung nach Anspruch 3 oder 4, dadurch gekennzeichnet, dass der Kopf (9) des Filterbehälters (1) sich bis zur ersten Verbindungsleitung (10) verjüngend ausgebildet ist.

6. Vorrichtung nach einem der Ansprüche 3 bis 5, dadurch gekennzeichnet, dass der Kopf (15) des Waschbehälters (11) sich bis zur zweiten Verbindungsleitung (17) verjüngend ausgebildet ist.

7. Vorrichtung nach einem der Ansprüche 3 bis 6, dadurch gekennzeichnet, dass die erste Verbindungsleitung (10) im unteren mittleren Bereich des Waschbehälters (11) endet.

8. Vorrichtung nach einem der Ansprüche 3 bis 7, dadurch gekennzeichnet, dass die zweite Verbindungsleitung (17) oberhalb des Endes (5) der Abflussleitung (3) endet.

9. Vorrichtung nach einem der Ansprüche 3 bis 8, dadurch gekennzeichnet, dass am Boden des Waschbehälters (11) eine verschliessbare Abflussleitung (20) zum Abführen von sich am Waschbehälterboden ansammelnden Verunreinigungen (26) angeordnet ist.

10. Vorrichtung nach Anspruch 9, dadurch gekennzeichnet, dass von der verschliessbaren Abflussleitung (20) vor der Verschlussstelle eine weitere Leitung (22) abzweigt.

11. Vorrichtung nach den Ansprüchen 3 bis 10, dadurch gekennzeichnet, dass der Waschbehälter (11) mit einer an sich bekannten Schwingeinrichtung (27) sowie einer Druckausgleichseinrichtung zum Ausgleichen der über die Schwingeinrichtung (27) erzeugten Druckdifferenzen verbunden ist.

12. Vorrichtung nach Anspruch 11, dadurch gekennzeichnet, dass die Druckausgleichseinrichtung von einem Standrohr (28) gebildet wird.

13. Vorrichtung nach den Ansprüchen 3 bis 12, dadurch gekennzeichnet, dass der Kopf (15) des Waschbehälters (11) über eine weitere verschliessbare Verbindungsleitung (29) mit dem Filterbehälter (1) in Verbindung steht, welche für das Filtermaterial (8) unzugänglich ist.

14. Vorrichtung nach Anspruch 13, dadurch gekennzeichnet, dass die weitere Leitung (29) mit einer Umwälzleitung (32) in Verbindung steht, über die mittels einer Pumpe (34) die im Waschbehälter (11) befindliche Flüssigkeit umgewälzt werden kann.

15. Vorrichtung nach Anspruch 14, dadurch gekennzeichnet, dass die Umwälzleitung (32) mit einer Dosiereinrichtung (35) zum Zudosieren von Chemikalien und/oder Beladungsstoffen in die Flüssigkeit verbunden ist.

## Claims

1. A process for cleaning filter material of filters for the mechanical filtration of liquids, especially water, in which the liquid to be cleaned flows from above downwards through a filter vessel filled with filter material, while the filter material laden with soiling substances is successively removed from the filter vessel at its upper end, fed to a washing vessel, cleaned and then fed to the filter vessel again at its lower end, characterised in that a filter material is used which is of lower specific gravity than the liquid, in that the soiled filter material is conveyed, by reason of the pressure difference present between filter vessel and washing vessel, from the filter vessel into the washing vessel and in that the cleaned filter material is conducted back by means of buoyancy forces from the washing vessel arranged beneath the filter vessel, into the filter vessel.

2. A process according to Claim 1, characterised in that the soiled carrier material is transported in turbulent manner through the connecting conduit leading from the filter vessel to the washing vessel.

3. An apparatus for carrying out the process according to Claim 1 or 2, where the upper end of a filter vessel at least partially filled with filter material is connected through a first connecting conduit for filter material with a washing vessel and this is connected through a second connecting conduit for filter material with the lower region of the filter vessel, while the filter material to be cleaned is conducted successively out of the filter vessel into the washing vessel and thence back into the filter vessel, characterised in that the filter material (8) has a lower specific weight than does the liquid, the washing vessel (11) is arranged below the filter vessel (1), and the second connecting conduit (17) extends, rising from the upper end of the washing vessel (11), to the lower region of the filter vessel (1).

4. An apparatus according to Claim 3, where the second connection is closable by means of a valve, characterised in that the upper end of the washing vessel (11) is connected with an air admission or discharge device (19).

5. An apparatus according to Claim 3 or 4, characterised in that the head (9) of the filter vessel (1) is formed tapering to the first connecting conduit (10).

6. An apparatus according to one of Claims 3 to 5, characterised in that the head (15) of the washing vessel (11) is formed tapering to the second connecting conduit (17).

7. An apparatus according to one of Claims 3 to 6, characterised in that the first connecting conduit (10) ends in the lower middle region of the washing vessel (11).

8. An apparatus according to one of Claims 3 to 7, characterised in that the second connecting conduit (17) ends above the end (5) of the outflow conduit (3).

9. An apparatus according to one of Claims 3 to 8, characterised in that a closable outflow conduit (20) for the discharge of impurities (26) collecting at the washing vessel bottom is arranged at the bottom of the washing vessel (11).

10. An apparatus according to Claim 9, characterised in that a further conduit (22) branches off from the closable outflow conduit (20) before the closure point.

11. An apparatus according to Claims 3 to 10, characterised in that the washing vessel (11) is connected with a vibrator device (27) known per se and a pressure-equalisation device for equalising the pressure differences produced through the vibrator device (27).

12. An apparatus according to Claim 11, characterised in that the pressure equalisation device is formed by a vertical pipe (28).

13. An apparatus according to Claims 3 to 12, characterised in that the head (15) of the washing vessel (11) is in communication through a further closable connecting conduit (29) with the filter vessel (1), which is innaccessible for the filter material (8).

14. An apparatus according to Claim 13, characterised in that the further conduit (29) is in communication with a circulating conduit (32) by way of which the liquid situated in the washing vessel (11) can be circulated by means of a pump (34).

15. An apparatus according to Claim 14, characterised in that the circulating conduit (32) is connected with a quantity-regulating device (35) for measuring chemicals and/or charging substances into the liquid.

## Revendications

1. Procédé de régénération de substance filtrante de filtres destinés à la filtration mécanique de liquides, notamment d'eau, dans lequel le liquide à purifier parcourt de haut en bas un récipient de filtrage rempli de substance filtrante, la substance filtrante chargée d'impuretés étant, successivement, évacuée du récipient de filtrage à sond extrémité supérieure, amenée à un récipient de lavage, purifiée et ensuite ramenée au récipient de filtrage à son extrémité inférieure, caractérisé en ce qu'on utilise une substance filtrante de poids spécifique inférieur à celui du liquide, en ce que la substance filtrante polluée est transportée du récipient de filtrage au récipient de lavage en raison de la différence de pression existante entre le récipient de filtrage et le récipient de lavage, et en ce que la substance filtrante purifiée est ramenée, grâce à des forces ascensionnelles du récipient de lavage placé a-dessous du récipient de filtrage, audit récipient de filtrage.

2. Procédé selon la revendication 1, caractérisé en ce que la matière porteuse polluée est transportée avec turbulence à travers la conduite de liaison allant du récipient de filtrage au récipient de lavage.

3. Dispositif pour mettre en oeuvre le procédé selon la revendication 1 ou 2, l'extrémité supérieure d'un récipient rempli au moins partiellement de substance filtrante étant reliée par une première conduite de liaison destinée à la substance filtrante à un récipient de lavage et celui-ci étant relié, par une seconde conduite de liaison destinée à la substance filtrante, à la zone inférieure du récipient de filtrage, la substance filtrante à purifier étant, successivement, amenée du récipient de filtrage au récipient de lavage et ramenée de celui-ci au récipient de filtrage, caractérisé en ce que la substance filtrante (8) présente un poids spécifique inférieur à celui du liquide, en ce que le récipient de lavage (11) est placé au-dessous du récipient de filtrage (1), et en ce que la seconde conduite de liaison (17) monte de l'extrémité supérieure du récipient de lavage (11) à la zone inférieure du récipient de filtrage (1).

4. Dispositif selon la revendication 3, la seconde conduite de liaison pouvant être obturée au moyen d'une soupape, caractérisé en ce que l'extrémité supérieure du récipient de lavage (11) est reliée à un agencement d'aérage ou de désaérage (19).

5. Dispositif selon la revendication 3 ou 4, caractérisé en ce que la tête (9) du récipient de filtrage (1) s'amincit jusqu'à la première conduite de liaison (10).

6. Dispositif selon l'une quelconque des revendications 3 ou 4, caractérisé en ce que la tête (15) du récipient de lavage (11) s'amincit jusqu'à la seconde conduite de liaison (17).

7. Dispositif selon l'une quelconque des revendications 3 à 6, caractérisé en ce que la première conduite de liaison (10) s'achève dans la zone centrale inférieure du récipient de lavage (11).

8. Dispositif selon l'une quelconque des revendications 3 à 7, caractérisé en ce que la seconde conduite de liaison (17) s'achève au-dessus de l'extrémité (5) de la conduite d'évacuation (3).

9. Dispositif selon l'une quelconque des revendications 3 à 8, caractérisé en ce que qu'une conduite d'évacuation (10) obturale, destinée à évacuer les impuretés (26) s'accumulant au fond du récipient de lavage, est placée au fond du récipient de lavage (11).

10. Dispositif selon la revendication 9, caractérisé en ce qu'une autre conduite (22) part de la conduite d'évacuation obturale (20), devant l'emplacement d'obturation.

11. Dispositif selon les revendications 3 à 10, caractérisé en ce que le récipient de lavage (11) est relié à un agencement de vibration (27) connu en soi, ainsi qu'à un agencement d'équilibrage de pression pour équilibrer les différences de pression produtes de part et d'autre de l'agencement de vibrations (27).

12. Dispositif selon la revendication 11, caractérisé en ce que l'agencement d'équilibrage de pression est constitué par un tube vertical (28).

13. Dispositif selon les revendications 3 à 12, caractérisé en ce que la tête (15) du récipient de lavage (11) est en liaison avec le récipient de filtrage (1), par une autre conduite de liaison obturale (29) inaccessible à la substance filtrante (8).

14. Dispositif selon revendication 13, caractérisé en ce que l'autre conduite (29) est en liaison avec une conduite de circulation (32), grâce à laquelle le liquide se trouvant dans le récipient de lavage (11) peut circuler sous l'action d'une pompe (34).

15. Dispositif selon la revendication 14, caractérisé en ce que la conduite de circulation (32) est reliée à un dispositif de dosage (35) destiné à ajouter au liquide des quantités dosées de produits chimiques et/ou de matières de charge.

Fig.1

Fig. 2

Fig.3